# EUROPÄISCHE PATENTANMELDUNG

(11) **EP 2 052 841 A1**
(43) Veröffentlichungstag der Anmeldung: **29.04.2009**
(21) Anmeldenummer: 07020649.5
(22) Anmeldetag: 22.10.2007
(51) Int. Cl.: B29C 49/66, B29C 49/46, B29C 49/16, B29C 49/06

(54) **Vorrichtung und Verfahren zum Erzeugen eines Luft/Wasser-Gemisches für einen Blasformprozess**

(71) Anmelder: FASTI GmbH, 6330 Kufstein (AT)
(72) Erfinder: Karrer, Gerhard, 6336 Langkampfen (AT)
(74) Vertreter: Wunderlich, Rainer

(57) **Zusammenfassung**

Die Erfindung betrifft eine Vorrichtung und ein Verfahren zum Erzeugen eines Luft/Wasser-Gemisches für einen Blasformprozess, wobei das Wasser vor der Vermischung und/oder das Luft/Wasser-Gemisch der Einwirkung eines Magnetfeldes unterzogen wird.

## Beschreibung

Die Erfindung betrifft eine Vorrichtung zum Erzeugen eines Luft/Wasser-Gemisches für einen Blasformprozess mit mindestens einer einen Druckluftstrom führenden Druckluftleitung, mindestens einer Wasserleitung, sowie mindestens einer Zuführdüse, die Wasser aus der Wasserleitung in die Druckluftleitung eindüst, um das Luft/Wasser-Gemisch zu erzeugen, gemäß dem Oberbegriff des Patentanspruchs 1. Ferner betrifft die Erfindung ein Verfahren zum Erzeugen eines Luft/Wasser-Gemisches für einen Blasformprozess, wobei Wasser über mindestens eine Zuführdüse in einen Druckluftstrom eingedüst und dabei das Luft/Wasser-Gemisch erzeugt wird, gemäß dem Oberbegriff des Patentanspruchs 8.

Bei den aus dem Stand der Technik bekannten Vorrichtungen für einen Blasformprozess mit Einspritzen einer Vorform erfordert das Blasen der Vorform in die Blasform und das Kühlen des geblasenen Endproduktes bis zu einer für die Entnahme ausreichenden Festigkeit einen hohen Zeitaufwand, der häufig die erforderliche Zeit für die Arbeitsvorgänge an der Einspritz- und der Arbeitsstation übertrifft. Um die Produktivität einer derartigen Vorrichtung zu steigern, ist es notwendig, die für den Blasvorgang erforderliche Zeit zu verkürzen.

Üblicherweise zirkuliert Kühlflüssigkeit durch die Blasform und kühlt dadurch den geblasenen Gegenstand, der in Berührung mit der Oberfläche des Hohlraums mit der Blasform steht. Eine derartige Kühlung erfolgt für gewöhnlich von der Außenseite des Formkörpers her. Bei Materialien mit einer schlechten Wärmeleitfähigkeit kann die Kühlung rascher erfolgen, wenn die Form sowohl von der Innenseite als auch von der Außenseite gekühlt wird. So kann das Material des geblasenen Gegenstandes von der Innenseite dadurch gekühlt werden, dass Wasserdampf in dem von dem geblasenen Gegenstand umschlossenen Raum eingeblasen wird.

In anderen Verfahren wird direkt Wasser in die frisch hergestellten Gegenständen gesprüht. Dabei wird die Kühlgeschwindigkeit gegenüber der Verwendung von Wasserdampf wesentlich erhöht, wobei allerdings Wasser in dem Gegenstand zurückgelassen wird. Ein derartiger Wasserrückstand ist jedoch unerwünscht.

Die DE 43 00 597 A1 beschreibt ein Verfahren zur Herstellung von Hohlkörpern aus thermoplastischen Kunststoffen wie Weithalsgefäßen, Flaschen und dergleichen. Dabei wird ein amorpher Vorformling spritzgegossen, auf eine Temperatur oberhalb der Glaserweichungstemperatur des Kunststoffs erwärmt, in einer Form abgelegt und zu einem Hohlkörper streckblasgeformt. Während des Streckblasens wird ein flüssiges Kühlmittel, wie Wasser, in einer solchen Menge in die Form zudosiert, dass die Temperatur des Vorformlings annähernd konstant bleibt oder sich nur unwesentlich erhöht.

Die DE 21 60 854 offenbart ein Verfahren zum Blasen plastischer Hohlkörper, wobei der frisch gebildete Gegenstand gekühlt wird, indem in sein Inneres eine unter Druck stehende und abgeschreckte Mischung von Luft und Wasser explosionsartig eingespritzt wird.

Die DE 260 5967 beschreibt eine Maschine und ein Verfahren zum raschen Abkühlen geblasener Kunststoffgegenstände, die auf einem Kernstab im Hohlraum einer Blasform geblasen werden. Dabei wird ein Nebel aus Flüssigkeitströpfchen und einem Trägergas in das Innere des Gegenstandes in Berührung mit seiner inneren Oberfläche geblasen. Dadurch wird ein Teil der Flüssigkeit zum Kühlen des Gegenstandes abgelagert, und der Nebel aus dem Inneren des Gegenstandes wird an einer von derjenigen Stelle entfernten Stelle, wo der Nebel eingeblasen wurde, abgezogen, wodurch der Nebel in dem vom Gegenstand umschlossenen Raum zirkuliert.

Es hat sich jedoch gezeigt, dass insbesondere bei der Verwendung eines Luft/WasserGemisches als Kühlmittel für die Innenseite der blasgeformten Gegenstände die Oberflächenstrukturen Unregelmäßigkeiten, insbesondere Eindellungen oder sogar Perforationen aufweisen, welche die Verwendungsmöglichkeiten entsprechender Artikel stark einschränken oder im Extremfall die gefertigten Produkte unbrauchbar machen. Ferner können entsprechende Oberflächendefekte auch zu einer Beeinträchtigung der Transparenz des Materials, aus dem der Gegenstand gefertigt wurde, führen. In jedem Fall wird die Qualität des Produktes herabgesetzt und der Verkaufswert deutlich erniedrigt.

Der Erfindung liegt die **Aufgabe** zugrunde, eine Vorrichtung und ein Verfahren zum Erzeugen eines Luft/Wasser-Gemisches bereitzustellen, welches auf eine in einem Blasformprozess eine schonende und zugleich effiziente Kühlung der gefertigten Produkte erlaubt.

Die Erfindung löst die Aufgabe durch eine Vorrichtung zum Erzeugen eines Luft/Wasser-Gemisches für einen Blasformprozess mit den Merkmalen nach Anspruch 1. Vorteilhafte Ausgestaltungen der Erfindung sind in den abhängigen Ansprüchen ausgeführt.

Durch das erfindungsgemäße Vorsehen einer Magneteinheit zum Erzeugen eines Magnetfeldes, welches auf das Wasser beziehungsweise auf das Luft/Wasser-Gemisch einwirkt, wurde überraschenderweise festgestellt, dass die Oberflächenqualität der gefertigten Blasformprodukte, insbesondere die Homogenität der Oberflächenstruktur, deutlich verbessert werden konnte. Darüber hinaus wurde der für den Trocknungsschritt erforderliche Zeit- und Energieaufwand erheblich reduziert.

Es wird angenommen, dass die üblicherweise auftretenden Oberflächendefekte auf zu große Wassertröpfchen zurückzuführen sind. Beim Einblasen können diese in der noch schmelzweichen Wand zu Beschädigungen und sogar Löchern führen. Zudem können diese Tropfen bei ihrer Verdampfung eine inhomogene Temperaturverteilung auf der erstarrenden Materialoberfläche bewirken. Die dabei auftretenden Temperaturgradienten führen durch die unterschiedliche Ausdehnung des Werkstoffes dann zu mechanischen Stresszuständen, die in Verformungen und Rissbildungen resultieren können.

Das erfindungsgemäß erzeugte Magnetfeld beeinflusst die Struktur des Wassers mit den darin enthaltenen Salzen, Mineralien und Wassermolekül-Clustern. Diese Cluster entstehen, indem sich Wassermoleküle zu Molekülaggregaten mit unterschiedlicher Molekülanzahl zusammenlagern. Durch die Einwirkung des Magnetfeldes können größere Cluster in kleinere Aggregate aufgeteilt werden. Auch wird angenommen, dass die gelösten Salze und Mineralien als mögliche Kondensationskeime für die Tröpfchen homogenisiert und zu kleineren mittleren Aggregatgrößen werden.

Auf diese Weise wird eine Vielzahl von gleichmäßig verteilten Kondensationskeimen gebildet, an denen die Wassermoleküle zu feinen Tröpfchen kondensieren können. Im Vergleich zu unbehandeltem Wasser oder einem Luft/Wasser-Gemisch wird eine höhere Anzahl von feineren Tröpfchen während der Kondensationsphase erzeugt. Diese feineren Tröpfchen sind homogener verteilt und werden durch Luftströmungen rascher und effektiver verwirbelt. Bei der Adsorption dieser Tröpfchen ergibt sich daher ein sehr gleichmäßiger Wasserfilm auf der Produktoberfläche ohne die Bildung von größeren Wassertropfen, welche die Oberfächenstruktur beeinträchtigten können. Die bessere Verteilung der Wasserphase auf kleinere Tröpfchen führt auch zu einer gleichmäßigeren Kühlung, so dass die überschüssige Wärme homogen abgeführt wird, und keine mechanischen Stresszustände durch thermische Gradienten aufgebaut werden.

Darüber hinaus wird auch die Effizienz des Kühlprozesses erhöht, so dass die Kühlung schneller und durch die Einsparungen an Energiekosten auch günstiger erfolgen kann. Insbesondere verbleibt auf der Produktoberfläche kaum Restwasser, welches zum einen die Struktur der abzukühlenden Oberfläche negativ beeinflusst und zum anderen durch einen zusätzlichen Trocknungsschritt ausgetrieben werden müsste.

Ein wesentlicher Vorteil der erfindungsgemäßen Vorrichtung liegt darin, dass herkömmliches Leitungswasser verwendet werden kann und keine aufwändigen destillativen oder entionisierenden Verfahren eingesetzt werden müssen.

Als Magneteinheiten können Permanentmagnete, z.B. aus metallischen Legierungen oder aus keramischen Oxidwerkstoffen, verwendet werden.

Zudem können auch Elektromagnete, insbesondere mit einem ferromagnetischen Werkstoff als Kernmaterial, zum Einsatz kommen, welche den Vorteil einer skalierbaren magnetischen Flussdichte bieten, die an die jeweiligen Bedingungen wie zum Beispiel Wasserhärte, Flussrate oder Leitungsdicke angepasst werden kann.

Die erfindungsgemäße Vorrichtung eignet sich insbesondere für das Extrusionsblasen mit tiefkalter Druckluft. Gerade bei Blasformprozessen mit Kunststoffen ist die Kühlung des Kunststoffproduktes der längste und schwierigste Teil beim Erstarrungsprozess. Durch die erfindungsgemäße Vorrichtung werden bei diesem komplexen Verfahrensschritt hohe Materialbelastungen vermieden und die Kühlzeiten reduziert.

Das vor der Magneteinheit erzeugte Magnetfeld weist eine definierte magnetische Flussdichte auf, die an die entsprechenden Umgebungsbedingungen, insbesondere die Verweilzeit der Wasser- und/oder der Luft/Wasser-Mischphase in dem Magnetfeld, angepasst ist. Dabei kann das Magnetfeld sowohl zur Einwirkung auf die in der Wasserleitung strömende Wasserphase wie auch auf das in der Druckluftleitung transportierte Luft/Wasser-Gemisch vorgesehen sein.

Bei einer Einwirkung lediglich auf das Luft/Wasser-Gemisch ist im Vergleich zu einer reinen Wasser-Bulk-Phase ein stärkeres Magnetfeld zu bevorzugen, da die Dichte in diesem Fall erheblich geringer ist und daher die Einwirkung entsprechend intensiver ausfallen sollte.

Geeigneterweise beträgt die magnetische Flussdichte des Magnetfeldes zwischen 0,01 und 1 T.

Diese Magnetfeldstärken können im unteren Bereich von Permanentmagneten und im oberen Bereich von Elektromagneten gut abgedeckt werden. Bei höheren magnetischen Flussdichten nimmt der energetische Aufwand überproportional zu und ist im Bezug auf den Nutzeffekt nicht mehr wirtschaftlich. Darüber hinaus erfordern sehr hohe magnetische Flussdichten entsprechende Abschirm- und Sicherungsmaßnahmen, um die Umgebung zu schützen. Bei niedrigeren magnetischen Flussdichten hingegen ist der Effekt auf die Homogenisierung der Kondensationskeime in der Wasserphase zu gering.

In einer besonders bevorzugten Ausführungsform der erfindungsgemäßen Vorrichtung sind mehrere Magneteinheiten zum Erzeugen des Magnetfeldes vorgesehen. Dabei kann die Anordnung der einzelnen Magneteinheiten und die relative Position der Magnete zueinander mittels einer Stelleinrichtung verändert werden.

Dadurch können beispielsweise sowohl die reine Wasserphase als auch das gebildete Luft/Wasser-Gemisch selbst, gewissermaßen in einer Nachbehandlung, der magnetischen Einwirkung ausgesetzt werden. Zudem bietet sich dadurch die Möglichkeit, ein relativ homogenes Magnetfeld über eine größere Fläche hinweg bereitzustellen und dadurch die Einwirkungsdauer deutlich zu erhöhen. Das Magnetfeld kann dabei statisch als auch dynamisch, z.B. als alternierendes Wechselfeld, ausgebildet sein. Insbesondere ist es möglich, mehrere Magneteinheiten als Permanentmagnete mit einer alternierenden Polung hintereinander anzuordnen. Dadurch wird das Wasser in kurzer räumlicher Folge mit entgegengesetzt ausgerichteten Magnetfeldern konfrontiert, und die Größe der Kondensationskeime weiter reduziert. Durch eine geeignete Wahl der Wechselfrequenz bei dynamischen Magnetfeldern beziehungsweise einer entsprechenden Anordnung von alternierenden Festmagneten ist auch die Bildung einer Resonanzwirkung möglich, sofern dieser Rhythmus im Bereich der Eigenschwingung des Wassers liegt. Die Magneteinheiten können ferner an verschiedenen Bereichen der Wasserleitung beziehungsweise der Druckluftleitung angeordnet sein. Um eine möglichst gleichmäßige Einwirkung zu erreichen, ist insbesondere ein ringförmige Anordnung der Magneteinheit vorteilhaft, welche die Leitungen umschließt.

Bevorzugt ist es, wenn das Luft/Wasser-Gemisch ein Sattdampfgemisch ist. Ein derartiges mit Wasser vollständig gesättigtes Medium liefert einen maximalen Kühlungseffekt. Gleichzeitig kann das eingesetzte Magnetfeld auf eine hohe Wasserdichte einwirken und diese homogenisieren. Gerade bei großvolumigen und dickwandigen Produkten kann mit Sattdampf mehr Wärme abgeführt werden als beim Einsatz von ungesättigter Druckluft. Dabei bleibt das Produkt absolut trocken. Neben einer deutlichen Zykluszeitreduktion von 10 bis 30% und mehr, wird die Qualität des Produktes erhöht, und die Oberfläche an der Innenseite des Produktes wird glatt und gleichmäßig.

Es ist weiter vorteilhaft, wenn die Temperatur des Wassers zwischen 3 - 8°C liegt. In diesem Temperaturbereich hat Wasser die höchste Dichte. Besonders vorteilhaft ist eine Wassertemperatur von 4°C. Bei diesem Wert wird das Dichtemaximum von Wasser erreicht. Das eingesetzte Magnetfeld kann hierbei sehr effizient einwirken. Das heißt bei einer gegebenen magnetischen Flußdichte wird eine Maximalanzahl von neuen Kondensationskeimen erzeugt, und die Dispersion von Wassertröpfchen in der Luft wird verbessert, indem eine hohe Anzahl feinster homogen dispergierter Tröpfchen in der Gasphase gebildet werden. Zudem ist bei diesen Temperaturen kein weiterer kostenintensiver Erwärmungsschritt notwendig. Insbesondere kann unbehandeltes Grund- oder Leitungswasser unmittelbar eingesetzt werden. Ferner ist bei diesen relativ niedrigen Temperaturen in Bezug auf die erwärmte Oberfläche eines Blasproduktes ein guter Kühleffekt zu erwarten, da ein ausreichend großer Temperaturunterschied vorliegt. Bei niedrigeren Temperaturen ist ein energieaufwändiger Kühlschritt erforderlich. Darüber hinaus kann das Magnetfeld in einer feststehenden Kristallstruktur kaum noch eine Wirkung auf die Wasserphase ausüben.

Geeigneterweise ist ein Blasdorn zum definierten Ausstoß des Luft/Wasser-Gemisches vorgesehen.

Der Blasdorn kann aufgrund seiner länglichen und schmalen Form tief in einen Hohlkörper eingeführt werden, so dass das Luft/Wasser-Gemisch weit innerhalb des Körpers ausgestoßen werden kann und sich durch die anschließende Verwirbelung die Wasserphase als homogener Wasserfilm gleichzeitig und gleichmäßig an der Innenseite des Formkörpers ausbildet. Durch die gleichzeitige und homogene Ausbildung des Wasserfilms werden Temperaturengradienten lateral zur Oberflächenorientierung vermieden und eine Materialbeanspruchung durch verschiedene thermische Ausdehnungszonen, die zu Rissen oder anderen Defekten führen können, verringert. Zudem ermöglicht der Blasdorn eine gezielte definierte und exakt ausgerichtete Orientierung des Ausstoßes des Luft/Wasser-Gemisches, wodurch die Reproduzierbarkeit der Verteilung des Kühlmittels erhöht wird, und die einzelnen Produkte in einer Serienfertigung eine gleichmäßige Qualität aufweisen. Ferner kann über den Blasdorn auch gleichzeitig ein Teil des zur Kühlung verwendeten und dadurch erwärmten Wassers wieder eingesaugt und zur erneuten Abkühlung und Wiedereinspeisung in einen Kreislauf rückgeführt werden. Dadurch wird der Kühleffekt erhöht und die einzusetzende Wassermenge reduziert. Ferner wird durch das simultane Einblasen und Absaugen in dem Hohlkörper die Turbulenz verstärkt, wodurch die Verteilung der Wassertröpfchen in der Gasphase und schließlich auch bei der Adsorption an der Innenseite des Formkörpers verbessert wird. Dies führt zu einer gleichmäßigen Kühlung und zu einer Schonung der Materialoberfläche bei einer deutlichen Reduzierung der Kühlungszeit. Es können somit pro Zeiteinheit mehr Produkte gekühlt und die Produktivität erhöht werden. Die Stückkosten werden dadurch abgesenkt.

Gegenstand der Erfindung ist auch ein Verfahren zum Erzeugen eines Luft/WasserGemisches für einen Blasformprozess nach Anspruch 8.

Durch das erfindungsgemäße Verfahren wird ein Luft/Wasser-Gemisch erzeugt, das einen hohen Homogenitätsgrad an feinsten gleichmäßig verteilten Wassertröpfchen aufweist. Diese Tröpfchen bilden auf einem Blasformprodukt einen homogenen Wasserfilm auf der Oberfläche aus, der das Produkt zum einen durch Abkühlen der Wasserphase und zum anderen durch den Phasenübergang, dem Verdampfen des Wassers, abkühlt. Der Kühleffekt wirkt sehr gleichmäßig an allen Bereichen der benetzten Oberfläche und liefert eine trockene glatte wohlstrukturierte Grenzfläche. Der hohe Homogenitätsgrad wird durch die feinst verteilten Kondensationskeime in Form von Wasserclustern erreicht, die durch die Einwirkung des Magnetfeldes in kleinstmögliche Untereinheiten umstrukturiert wurden. Die feine Verteilung der Wassertröpfchen wird durch die Zerstäubung des Wassers mittels einer Zuführdüse unterstützt.

In einer bevorzugten Ausführungsform des erfindungsgemäßen Verfahrens wird das Verfahren zur Herstellung von Hohlkörpern eingesetzt.

Dabei wird das zu bearbeitende Produkt von innen durch das über einen Blasdorn eingespeiste Luft/Wasser-Gemisch gekühlt und gleichzeitig in die gewünschte Form blasgeformt. Somit können zwei Arbeitsschritte in einer Operation kostensparend zusammengefasst werden. Zur Herstellung von Hohlkörpern sind dabei insbesondere die Verfahren Streckblasen, Spritzblasen und das Extrusionsblasen geeignet. Dies sind Verfahren aus der Fertigungstechnik zur wirtschaftlichen Herstellung von direkt gebrauchsfertigen Hohlkörpern mit einem präzisen Mündungs-, Dichtbereich und gleichbleibender Wandstärke.

Es ist vorteilhaft, wenn vor dem Blasformprozess ein Vorformling aus einem thermoplastischen Material oberhalb einer Erweichungstemperatur des Materials erwärmt wird.

Bei thermoplastischen Kunststoffen entspricht die Erweichungstemperatur der Glasübergangstemperatur.

Beim Spritzblasen (Ein-Stufen-Verfahren) wird zunächst durch Spritzgießen ein zylindrischer Vorformling mit dem späteren Mündungs- und Dichtbereich aus einem thermoplastischen Material hergestellt. Dieser Vorformling, auch Preform genannt, wird in einer Konditionierstation thermisch auf das Blasprofil eingestellt und anschließend dem Blasvorgang zugeführt. Beim Blasvorgang wird erst die Preform in den zu expandierenden Bereichen oberhalb der Erweichungstemperatur gebracht und mittels Blasdorn und Blaswerkzeug auf die endgültige Kontur aufgeblasen. Nach dem Abkühlen kann das fertige Formteil entnommen werden. Beim Streckblasen (Zwei-Stufen-Verfahren) werden die Preformen mit einer Heizeinheit, zum Beispiel einem Infrarot-Heizmodul mit mehreren Heizzonen, auf Umformtemperatur gebracht, wobei die einzelnen Zonen separat gesteuert werden können, um das geeignete Heizprofil für den Blasprozess zu erhalten. Zur gleichen Zeit werden die Gewindeflächen der Vorformlinge vor den hohen Temperaturen geschützt und gekühlt, um ein Verziehen der Gewindegänge zu vermeiden. Nachdem die Preformen eine Ausgleichszone durchlaufen haben, werden diese an die Blasstation übergeben. In der Blasstation werden die Preformen mittels Blasdorn in Längsrichtung und gleichzeitig mit einem geringen Blasdruck (5-15 bar) in Umfangsrichtung gestreckt, so dass sich die Molekülketten orientieren können, um dann mit Hochdruck (-40 bar) fertig ausgeblasen zu werden. Die Kühlung der bis zu 65°C warmen Produkte wird zum Teil auch durch die gekühlten Blasformen in der Blasstation erreicht. Die biaxiale Orientierung der Molekülketten bewirkt, dass eine höhere Festigkeit bei geringerer Wandstärke, das heißt eine Permea-tionsreduzierung und ein besserer O-berflächenglanz auftritt.

Beim Extrusionsblasen wird zunächst kontinuierlich oder auch diskontinuierlich ein Schlauch aus einem heißen formbaren Material, zum Beispiel thermoplastischer Kunststoff oder Glas, aus einem angeflanschten Werkzeug als Vorformling senkrecht nach unten extrudiert. Die Materialstärke im Schlauch wird dabei entsprechend der Form des fertigen Werkstücks geregelt. Ein Blasdorn wird dabei von oben oder unten in den Schlauch eingeführt. Das zu diesem Zeitpunkt noch geöffnete zweigeteilte Werkzeug fährt dann zu und umhüllt den Schlauch mitsamt dem Dorn. Durch den Blasdorn wird sodann das Luft/Wasser-Gemisch in den Schlauch gepresst, womit dieser aufgeblasen und an die Kontur des Blaswerkzeugs angepresst und abgekühlt wird. Das thermoplastische Material passt sich so der vorgegebenen Form an und wird fest.

Durch Variation der Materialstärke im Schlauch lässt sich die Dicke des Materials im Fertigprodukt steuern.

Als Kunststoffe eignen sich insbesondere Polyolefine, vor allem Polyethylen und Polypropylen. Aber auch Plexiglas, Polycarbonat, Polyamid und Mischungen davon können gut verarbeitet werden. Für technische Artikel eignen sich thermoplastisches Polyurethan oder thermoplatische Elastomere auf Urethanbasis.

Die Erfindung wird nachfolgend anhand eines Ausführungsbeispiels weiter erläutert, welches in den Zeichnungen schematisch dargestellt ist.

Es zeigen:
- Fig. 1: eine schematische Darstellung der erfindungsgemäßen Vorrichtung für ein kontinuierliches Blasverfahren mit gesättigter Luft;
- Fig. 2: eine schematische Darstellung eines Querschnitts durch einen Einspritz- block der erfindungsgemäßen Vorrichtung;

Es sind verschiedene Ausführungsformen der erfindungsgemäßen Vorrichtung denkbar. Im Folgenden wird eine bevorzugte Ausführungsform beschrieben.

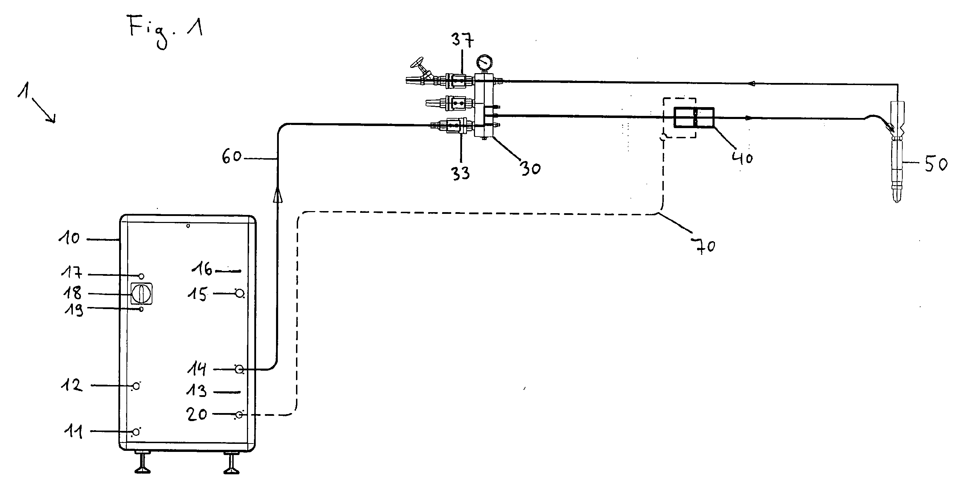

Die in Figur 1 beispielhaft gezeigte Vorrichtung 1 weist ein Versorgungsgerät 10, einen Blasventilblock 30, einen Einspritzblock 40 sowie einen Blasdorn 50 auf, die über eine Druckluftleitung 60 miteinander verbunden sind. Über eine Wasserleitung 70 ist der Einspritzblock 40 zusätzlich mit dem Versorgungsgerät 10 verbunden.

Das Versorgungsgerät 10 weist einen Wassereinlass 11, einen Wasserauslass 12, einen Ölabscheider 13, einen Prozessluftauslass 14, einen Drucklufteinlass 15 sowie einen Steuerluftanschluss 16 für den Blasventilblock 30 auf. Ferner sind eine Signalhupe 17, ein Hauptschalter 18, ein elektrischer Hauptanschluss 19 und ein Prozesswasserauslass 20 für die Einspritzung am Einspritzblock 40 vorgesehen. Der Blasventilblock 30 weist zudem ein Eintrittsventil 33 und ein Austrittsventil 37 zur Steuerung der Zustrom- und Ausstromraten an Prozessluft auf.

Am Drucklufteinlass 15 strömt Druckluft in das Versorgungsgerät 10 ein und wird zur kalten Prozessluft abgekühlt, die am Prozessluftauslass 14 austritt und in die Druckluftleitung 60 eingespeist wird. Die kalte Prozessluft gelangt über das Eintrittsventil 33 in den Blasventilblock 30, der den Ausgangsdruck und die Strömungsgeschwindigkeit der Prozessluft regelt. Anschließend strömt die Prozessluft durch den Einspritzblock 40, in dem Wasser zu der Prozessluft gedüst wird. Ferner sind an dem Einspritzblock 40 Magneteinheiten 80, 85 vorgesehen, welche das zugeführte Wasser oder das gebildete Luft/Wasser-Gemisch der Einwirkung eines Magnetfeldes unterziehen.

Das magnetisch behandelte Luft/Wasser-Gemisch tritt in den Blasdorn 50 ein und wird über dessen Mündung in einen Vorformling eingepresst. Nach erfolgter Abkühlung wird ein Teil des Luft/Wasser-Gemisches durch den Blasdorn 50 wieder aufgenommen und über den Blasventilblock 30 und das Austrittsventil 37 in das Versorgungsgerät 10 zurückgeführt. Dort wird das Wasser kondensiert, abgekühlt und erneut in den Kreislauf eingespeist.

Das Wasser tritt aus dem Prozesswasserauslass 20 aus dem Versorgungsgerät 10 aus und wird über die Wasserleitung 70 dem Einspritzblock 40 zugeführt, wo die Eindüsung des Wassers in die kalte Prozessluft erfolgt. Die Versorgung des Versorgungsgerätes 10 mit gewöhnlichem Leitungswasser erfolgt über den Wassereinlass 11 und den Wasserauslass 12. Die notwendige Druckluft wird am Drucklufteinlass 15 dem Versorgungsgerät 10 zugeführt. Über den Steuerluftauslass 16 wird der Blasventilblock 30 mit der Steuerluft versorgt, welche insbesondere den Durchlass des Eintrittsventils 33 und des Austrittsventils 37 steuert, um die Strömungsgeschwindigkeit der Prozessluft den jeweiligen Bedingungen anzupassen.

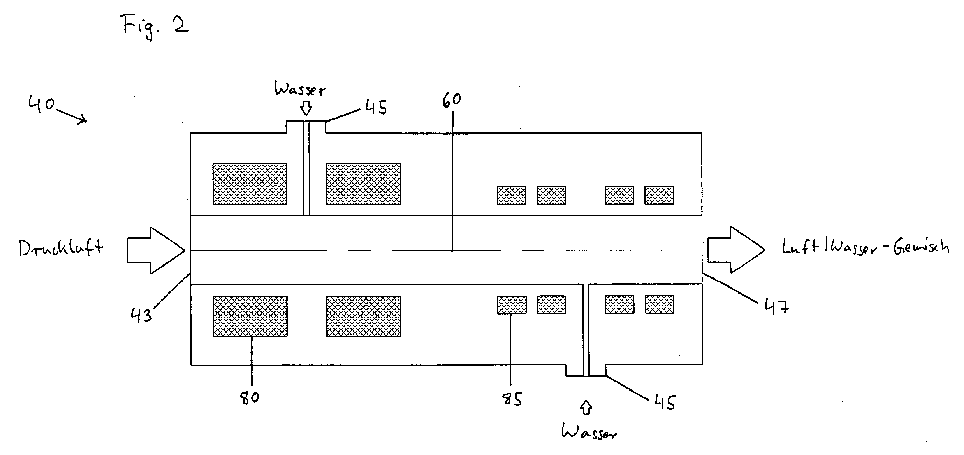

In Figur 2 ist ein schematischer Querschnitt durch einen Einspritzblock 40 gezeigt. Die Druckluftleitung 60 verläuft durch den Einspritzblock 40, wobei kalte Prozessluft am Eintritt 43 in den Einspritzblock 40 eintritt und am Austritt 47 als Luft/Wasser-Gemisch wieder verlässt. Ober- und unterhalb der Druckluftleitung 60 sind Zuführdüsen 45 angeordnet, welche in die Druckluftleitung 60 münden und Wasser in die Prozessluft zerstäuben. Ferner sind in der Ummantelung des Einspritzblocks 40 große und kleine Magnetblöcke 80, 85 vorgesehen, welche die Druckluftleitung 60 ringförmig umgeben. Dabei sind die Magnetblöcke 80, 85 so angeordnet, dass sowohl das in den Zuführdüsen 45 strömende Wasser wie auch das in der Druckluftleitung 60 transportierte Luft/Wasser-Gemisch im Einflussbereich der Magnetfelder stehen. Die großen Magnetblöcke 80 sorgen für eine erste grobe Dispersion der Wassercluster, während die nachfolgend angeordneten kleineren Magneteinheiten 85 eine weitere feinere Homogenisierung vornehmen. Am Austritt 47 wird das magnetisch vollständig behandelte Luft/Wasser-Gemisch ausgetragen und über die Druckluftleitung 60 weiter zum Blasdorn 50 zur Einspeisung in den Vorformling transportiert.

## Patentansprüche

1. Vorrichtung zum Erzeugen eines Luft/Wasser-Gemisches für einen Blasformprozess mit:
- mindestens einer einen Druckluftstrom führenden Druckluftleitung (60),
- mindestens einer Wasserleitung (70), sowie
- mindestens einer Zuführdüse (45), die Wasser aus der Wasserleitung (70) in die Druckluftleitung (60) eindüst, um das Luft/Wasser-Gemisch zu er zeugen,
**dadurch gekennzeichnet,**
**dass** mindestens eine Magneteinheit (80, 85) zum Erzeugen eines Magnetfeldes vorgesehen ist, durch welches die Wasserleitung (70) und/oder die Druckluftleitung (60) zur Einwirkung des Magnetfeldes auf das Wasser beziehungs weise das Luft/Wasser-Gemisch hindurchtritt.

2. Vorrichtung nach Anspruch 1,
**dadurch gekennzeichnet,**
**dass** ein Blasdorn (50) zum definierten Ausstoß des Luft/Wasser-Gemisches vorgesehen ist.

3. Vorrichtung nach einem der Ansprüche 1 oder 2,
**dadurch gekennzeichnet,**
**dass** die magnetische Flussdichte des Magnetfeldes zwischen 0,01 bis 1 T beträgt.

4. Vorrichtung nach einem der Ansprüche 1 bis 3,
**dadurch gekennzeichnet,**
**dass** mehrere Magneteinheiten (80, 85) zum Erzeugen des Magnetfeldes vorgesehen sind.

5. Vorrichtung nach einem Anspruch 4,
**dadurch gekennzeichnet,**
**dass** die mehreren Magneteinheiten (80, 85) ein magnetisches Wechselfeld erzeugen.

6. Vorrichtung nach einem der Ansprüche 1 bis 5,
**dadurch gekennzeichnet,**
**dass** das Luft/Wasser-Gemisch ein Sattdampfgemisch ist.

7. Vorrichtung nach einem der Ansprüche 1 bis 6,
**dadurch gekennzeichnet,**
**dass** die Temperatur des Wassers zwischen 3 bis 8°C beträgt.

8. Verfahren zum Erzeugen eines Luft/Wasser-Gemisches für einen Blasformprozess, wobei Wasser über mindestens eine Zuführdüse (45) in einen Druckluftstrom eingedüst und dabei das Luft/Wasser-Gemisch erzeugt wird,
**dadurch gekennzeichnet,**
**dass** das Wasser und/oder das Luft-Wasser-Gemisch durch ein Magnetfeld geleitet wird, welches von zumindest einer Magneteinheit (80, 85) erzeugt wird.

9. Verfahren nach Anspruch 8, zum Erzeugen eines Luft/Wasser-Gemisches **dadurch gekennzeichnet,**
**dass** das Verfahren zur Herstellung von Hohlkörpern eingesetzt wird.

10. Verfahren nach Anspruch 8 oder 9,
**dadurch gekennzeichnet,**
**dass** vor dem Blasformprozess ein Vorformling aus einem thermoplastischen Material oberhalb einer Erweichungstemperatur des Materials erwärmt wird.
